# EUROPEAN PATENT SPECIFICATION

(11) **EP 2 383 155 B1**
(45) Date of publication and mention of the grant of the patent: **11.06.2014**
(21) Application number: 11164324.3
(22) Date of filing: 29.04.2011
(51) Int. Cl.: B60R 25/00

(54) **Security system of an agricultural vehicle.**
Sicherheitssystem eines landwirtschaftlichen Fahrzeugs
Système de sécurité de véhicule agricole

(30) Priority: 29.04.2010 IT TO20100366
(43) Date of publication of application: 02.11.2011
(73) Proprietor: CNH Industrial Italia S.p.A., 10135 Torino (IT)
(72) Inventor: Morselli, Ricccardo, 41057, San Vito di Spilamberto (MO) (IT); Gaido, Massimo, 10040, Cumiana fraz. Tavernette Torino (IT); Zuccotti, Saverio, 15060, Basaluzzo (AL) (IT)
(74) Representative: CNH Industrial IP Department

(56) References cited:
- JP-A- 2005 297 919
- US-A1- 2002 084 887
- US-A1- 2005 264 396
- US-B1- 6 331 812
- US-B1- 6 522 251

## Description

### Field of the invention

The present invention relates to a security system for a vehicle comprising an ignition lock and an ignition key for releasing the ignition lock, wherein the key incorporates a machine-readable memory chip for storing a security code, and an electronic module is mounted in the vehicle for reading the code stored in the key and disabling normal operation of the vehicle when the code stored in the key does not match a code stored on board the vehicle.

### Background of the invention

In tractors that are currently in use, each tractor has a unique access key for locking and un-locking the cab doors. However, all tractors use the same mechanical ignition key to start the engine and permit operation of the tractor. This is done for convenience to enable employees on a farm to use a common key to operate any tractor once its cab has been unlocked by the farmer.

However, while the use of a key common to all ignition locks is convenient for the farmer, it is not very secure and has simplified vehicle theft. Once access has been gained to the cab of a tractor, a thief can use any commonly available ignition key to start the engine and drive the tractor away.

Road vehicle ignition systems are known in which the ignition key incorporates a machine readable memory chip, such as an RFID module, for storing a security code. An electronic module is mounted on board the vehicle for reading the code stored in the key and disables normal operation of the vehicle when the code stored in the key does not match a code stored on board the vehicle.

In such known security systems, the key codes are factory set and are selected such that each key is unique to a vehicle. This level of security is ideal for road vehicles but is inconvenient for agricultural vehicles where a farmer would prefer to be able to have his employees use the same key to operate all the vehicles on the farm.

US 2005/264396 discloses a known security system according to the preamble of claim 1.

### Object of the invention

The present invention seeks therefore to make agricultural vehicles more difficult to steal while still allowing a farmer to use the same key on several vehicles.

### Summary of the invention

In accordance with the present invention, there is provided security system according to claim 1.

By making the key and the electronic module programmable from within the vehicle, the invention allows a farmer to set the same security codes on all his vehicles so that once again the same key can be used by an employee to operate all the vehicles on that farm. However, any key usable on the vehicles of that farm will not be usable on another farm which will have been programmed to operate with a different security code.

The electronic module may itself be programmable by the operator, in which case it may have a display module and a device such as a keyboard, mouse or joystick for manual entry of data. Alternatively, the electronic module may require connection to an external data processing and input device which may be a dedicated item of equipment available only to service personnel or a suitably programmed portable general purpose computer.

The memory chip is preferably part of an RFID (radio frequency identification) module that communicates by radio with the electronic module.

Power may be supplied to the chip through electrical contacts but it is preferred to use an inductive loop.

It is preferred for the ignition lock to include a mechanical lock and for the key to include a mechanical key element for releasing the mechanical lock. By making the mechanical key element of a standard design common to all security systems, backward compatibility with existing security system can be maintained, allowing the farmer to use the same key for his vehicles.

It is possible for the electronic module to prevent the vehicle engine from starting when the code stored in the key does not match a code stored on board the vehicle. In this case, all systems on board the vehicle would be disabled. However, it is alternatively possible for the electronic module to permit some operation of the vehicle but with only severely reduced functionality when the code stored in the key does not match the code stored on board the vehicle. For example, the speed may be limited to 1 kph and/or all the hydraulic and PTO systems may be disabled.

### Brief description of the drawings

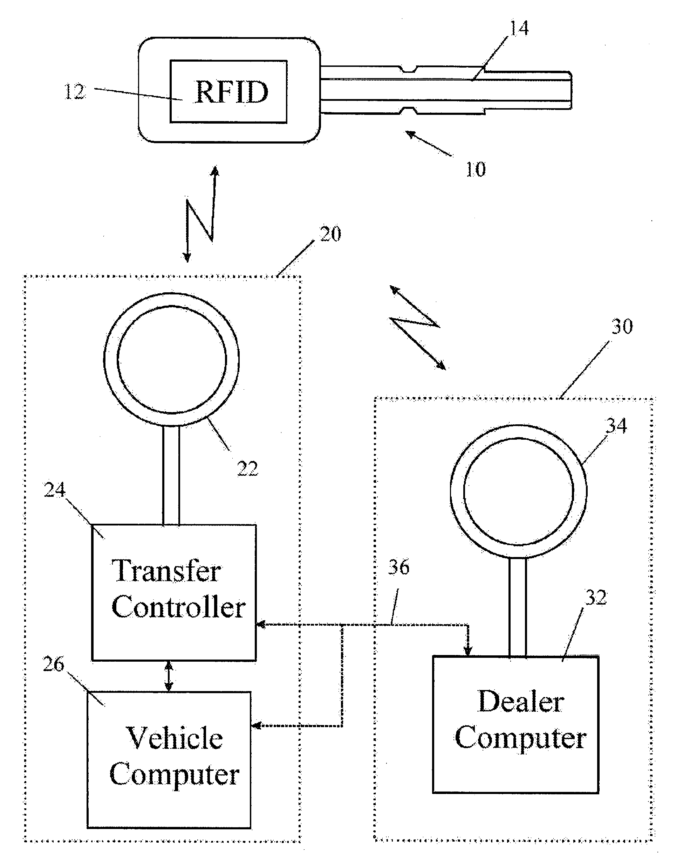

The invention will now be described further, by way of example, with reference to the accompanying drawing, which schematically shows a vehicle security system of the invention.

### Detailed description of the preferred embodiment

The security system shown in the drawing comprises a key 10 which incorporates a mechanical key element 14 and an RFID module 12. The electronic module of the security system mounted on board the vehicle is shown within the box 20 drawn in dotted lines. The module 20 include a transfer controller 24 connected to an antenna 22 and a vehicle computer 26, which may optionally be programmable. The box designated 30 and also drawn in dotted lines encloses equipment available at a dealership or service depot. This equipment included a computer 32 connected to an antenna 34 and connectible through a wired connection 36 to the transfer controller 24 or optionally to the vehicle computer 26.

The RFID module 12 includes a radio communication circuit and a memory chip on which there is a stored a security code. Additionally, the module 12 includes an inductive loop and a rectifier circuit to enable the module to be operated by power inductively coupled into the key 10. The only electronic component of the key that is essential to the present is the memory chip. Instead of relying on RF communication with the electronic module 20, the key may have electrical contacts to connect it to the transfer controller 24 and in such a case it need not have its own power supply. The transfer controller 24 of the electronic module 20 is used to read the code written in the memory chip of the key 10 and when necessary to write to the same memory.

The vehicle computer 26 includes an internal memory for storing a security code and can be used to write both into its internal memory and into the key memory, as will be explained below.

The dealer computer 32 can also be used with the antenna 34 to write to the key memory and through its wired connection 36 to the transfer controller 24 or the vehicle computer 26 to change the security code stored on board the vehicle.

When the vehicle is first supplied, a predetermined code, for example 0000, is stored both in the key and in each manufactured vehicle. The dealer computer 32 is programmed such that at any time it can reset the security code of any key or any vehicle.

The mechanical key element 14 of the key 10 fits any mechanical ignition lock, including the locks of vehicles already in existence. Consequently, the key 10 can be used with any existing vehicle as well as any new vehicle with which it is supplied.

On purchase of a new vehicle, the owner is informed of the security number stored in the key 10 and in the electronic module 20 of the vehicle. In the example given above, that number would be 0000. When the key 10 is placed in the ignition lock, the transfer controller will read this code from the key 10 and the vehicle computer 26 will compare it with the code stored in the vehicle and allow normal operation of the vehicle if the codes match.

When the security code stored in a vehicle is known to the vehicle operator, a security program can be run on the vehicle computer 26 to change the security access codes in the key and on board the vehicle. Tractors and other agricultural vehicles such as harvesters often have computers with display units, joy sticks and buttons for entering data and such a computer can be used to change the security access codes. If vehicle computer 26 has no facility for data entry, it is possible to connect to the transfer controller a suitably programmed portable computer or other dedicated item of service equipment to permit the operator to communicate with the vehicle computer 26.

After selecting to run the security program, the operator is asked first to enter the existing security code. As this code is only known to the vehicle proprietor and cannot be read even from a valid key for that vehicle, an employee using the vehicle will not be able to tamper with the security codes. After entering the existing code (0000 in the above example), the operator will be asked to set a new code (e.g. 1234) and after the new security code has been confirmed it is simultaneously stored both in the key 10 and in the memory of the electronic module 20. The proprietor can in this way set the new code (1234) in all vehicles used on that farm and the same key will therefore be able to be used with all the vehicles.

In the same way, the code can be written to a key having an different code without changing the code stored in the vehicle, this allowing a farmer to personalise any existing key or to program a new key having the factory default code stored in it.

On a different farm, the same procedure will be used by another farmer to set a different security code (e.g. 1111) on his vehicles. Though any key will be usable on a vehicle belonging to the same farm, it will not be usable with a vehicle of another farm.

In the event that the codes stored in a vehicle are not known, the security system can be reset at a dealership. In this case, the dealer computer 32 will operate a different program that does not require the existing stored code to be entered before it is overwritten and, using the antenna 34, the dealer computer 32 can write to any key 10 to reset the code stored in its memory.

When the codes stored in the key 10 and the electronic modules 20 do not match, it is possible either to disable the vehicle completely or to allow it to operate with severely reduced functionality. For example, the vehicle could be allowed to start, but only permitted to move very slowly. This would allow it to be moved out of the way if it is obstructing another vehicle. Alternatively, it may be allowed to power a hydraulic circuit but not to move at all.

In addition to setting a primary security code, it is advantageous to be able to set a backup code for use in certain emergencies. For example, if while working in the field, an employee should experience problems with the key then the farmer may communicate to him, for example by telephone, a security code to enable the employee to continue working. In such an event, it would be inadvisable to disclose the primary security code but if a backup code has been set up then it can be used to bypass the security system temporarily. For example, access using manual entry of the backup code may serve only to permit the engine to be cranked a limited number of times.

It is further desirable to set a minimum time between changes of the security code. This is to prevent a would-be thief from working his way sequentially through all possible security codes. Thus for example after a first key has been programmed, it may be necessary to wait five minutes before a second can be programmed, a further 10 minutes before a third, a further 20 minutes before a fourth and so on. If such an attempt is made to gain access using an incorrect password then it is desirable to provide a notification to warn the farmer of the attempt to tamper with the security system.

While the memory within the key mounted chip is intended primarily for storage of a security code, it is additionally possible when a facility exists to write to that memory to use it as a means for data exchange between the vehicle and a base station. Hence, the memory may additionally be used to store such data as personal settings and vehicle performance.

A further possible use for the memory contained within the ignition key is to store within it a driver identification code. This can allow a recorder or data logger on board the vehicle to store information on who is operating a vehicle, enabling the former to retain control of how the vehicles on the farm are used. The key can in this case also serve as an electronic badge to monitor such parameters as operator working hours.

## Claims

1. A vehicle comprising a security system with an ignition lock and an ignition key (10) for releasing the ignition lock, wherein the key incorporates a machine-readable memory chip (12) for storing a security code, and an electronic module (20) is mounted in the vehicle for reading the code stored in the key (10) and disabling normal operation of the vehicle when the code stored in the key (10) does not match a code stored on board the vehicle, **characterised in that** the electronic module (20) is additionally capable of writing to the memory chip (12) incorporated in the key (10), so as to enable an authorised vehicle operator to change the code stored in the key and/or the code stored on board the vehicle.

2. A vehicle as claimed in claim 1, wherein the ignition lock further includes a mechanical lock and the key includes a mechanical key element (14) for releasing the mechanical lock.

3. A vehicle as claimed in claim 1 or 2, wherein the mechanical key element (14) is of a standard design common to all security systems.

4. A vehicle as claimed in any preceding claim, wherein the electronic module (20) is operative to prevent the vehicle engine from starting when the code stored in the key does not match a code stored on board the vehicle.

5. A vehicle as claimed in any of claims 1 to 3, wherein the electronic module (20) is operative to permit operation of the vehicle but with only severely reduced functionality when the code stored in the key does not match the code stored on board the vehicle.

6. A vehicle as claimed in any preceding claim, wherein the memory chip in the key forms part of a module (12) that communicates by way of a remote wireless link with the electronic module (20).

7. A vehicle as claimed in any preceding claim, wherein power is supplied to the key by way of an inductive loop.

8. A vehicle as claimed in any preceding claim, wherein the electronic module (20) is programmable by the operator and includes a display module and a device for manual entry of data.

9. A vehicle as claimed in any one of claims 1 to 7, wherein the electronic module is connectible to an external data processing and input device to enable the security codes stored in the key and on board the vehicle to be changed.

10. A vehicle as claimed in claim 9, wherein the electronic module is operative to prevent changes in the security codes for a predetermined time following any attempt to change the security codes.

11. A vehicle as claimed in any preceding claim, wherein the electronic module is further operative to store a backup security code to permit temporary access to the vehicle.

12. A vehicle as claimed in any preceding claim, wherein the electronic module is further operative to write to the memory in the key data relating to personal settings of the driver and/or vehicle performance data.

13. A vehicle as claimed in any preceding claim, wherein the memory chip incorporated within the key is further operative to store a driver identification code and a recorder is provided on board the vehicle to monitor actions performed by each identified driver.

## Patentansprüche

1. Ein Fahrzeug, das ein Sicherheitssystem mit einem Zündschloss und einem Zündschlüssel (10) zum Öffnen des Zündschlosses umfasst, wobei der Schlüssel einen Maschinen-lesbaren Speicherchip (12) zum Speichern eines Sicherheitscodes beinhaltet, und mit einem elektronischen Modul (20), das in dem Fahrzeug zum Lesen des in dem Schlüssel (10) gespeicherten Codes und zum Sperren des Normalbetriebs des Fahrzeuges befestigt ist, wenn der in dem Schlüssel (10) gespeicherte Code nicht mit einem an Bord des Fahrzeuges gespeicherten Code übereinstimmt, **dadurch gekennzeichnet, dass** das elektronische Modul (20) zusätzlich fähig ist, auf den in dem Schlüssel enthaltenen Speicherchip (12) zu schreiben, um es einem autorisierten Fahrzeug-Betreiber zu ermöglichen, den in dem Schlüssel gespeicherten Code und/oder den an Bord des Fahrzeuges gespeicherten Code zu ändern.

2. Ein Fahrzeug nach Anspruch 1, bei dem das Zündschloss weiterhin ein mechanisches Schloss einschließt und der Schlüssel ein mechanisches SchlüsselElement (14) zum Öffnen des mechanischen Schlosses einschließt.

3. Ein Fahrzeug nach Anspruch 1 oder 2, bei dem das mechanische SchlüsselElement (14) eine Standardkonstruktion aufweist, die allen Sicherheitssystemen gemeinsam ist.

4. Ein Fahrzeug nach einem der vorhergehenden Ansprüche, bei dem das elektronische Modul (20) zum Verhindern des Startens des Fahrzeugmotors betreibbar ist, wenn der in dem Schlüssel gespeicherte Code nicht mit dem an Bord des Fahrzeuges gespeicherten Code übereinstimmt.

5. Ein Fahrzeug nach einem der Ansprüche 1 bis 3, bei dem das elektronische Modul (20) betreibbar ist, um einen Betrieb des Fahrzeuges mit lediglich stark reduzierter Funktionalität zuzulassen, wenn der in dem Schlüssel gespeicherte Code nicht mit dem an Bord des Fahrzeuges gespeicherten Code übereinstimmt.

6. Ein Fahrzeug nach einem der vorhergehenden Ansprüche, bei dem der Speicherchip in dem Schlüssel einen Teil eines Moduls (12) bildet, das über eine drahtlose Verbindungsstrecke mit dem elektronischen Modul (20) kommuniziert.

7. Ein Fahrzeug nach einem der vorhergehenden Ansprüche, bei dem die Leistung an den Schlüssel über eine Induktionsschleife geliefert wird.

8. Ein Fahrzeug nach einem der vorhergehenden Ansprüche, bei dem das elektronische Modul (20) durch den Betreiber programmierbar ist und ein Anzeigemodul und eine Vorrichtung zur manuellen Eingabe von Daten einschließt.

9. Ein Fahrzeug nach einem der Ansprüche 1 bis 7, bei dem das elektronische Modul mit einem externen Datenverarbeitungs- und Eingabegerät verbindbar ist, um das Ändern der in dem Schlüssel und an Bord des Fahrzeuges gespeicherten Sicherheitscodes zu ermöglichen.

10. Ein Fahrzeug nach Anspruch 9, bei dem das elektronische Modul zum Verhindern von Änderungen der Sicherheitscodes für eine vorgegebene Zeit nach einem Versuch der Änderung der Sicherheitscodes betreibbar ist.

11. Ein Fahrzeug nach einem der vorhergehenden Ansprüche, bei dem das elektronische Modul weiterhin zum Speichern eines Reserve-Sicherheitscodes betreibbar ist, um einen vorübergehenden Zugang an das Fahrzeug zu ermöglichen.

12. Ein Fahrzeug nach einem der vorhergehenden Ansprüche, bei dem das elektronische Modul weiterhin betreibbar ist, in den Speicher in dem Schlüssel Daten einzuschreiben, die sich auf persönliche Einstellungen des Fahrers und/oder Fahrzeug-Betriebsleistungs-Daten beziehen.

13. Ein Fahrzeug nach einem der vorhergehenden Ansprüche, bei dem der in dem Schlüssel enthaltene Speicherchip weiterhin zum Speichern eines Fahrer-Identifikationscodes betreibbar ist, und ein Aufzeichnungsgerät an Bord des Fahrzeuges vorgesehen ist, um Aktionen, die von jedem identifizierten Fahrer ausgeführt werden, überwachen.

## Revendications

1. Véhicule comprenant un système de sécurité comportant une serrure de contact et une clé de contact (10) pour déverrouiller la serrure de contact, dans lequel la clé incorpore une puce à mémoire lisible par ordinateur (12) destinée à enregistrer un code de sécurité, et un module électronique (20) est monté dans le véhicule pour lire le code enregistré dans la clé (10) et désactiver le fonctionnement normal du véhicule lorsque le code enregistré dans la clé (10) ne correspond pas à un code enregistré à bord du véhicule, **caractérisé en ce que** le module électronique (20) est capable en plus d'écrire sur la puce à mémoire (12) incorporée dans la clé (10), de façon à permettre à un intervenant habilité du véhicule de modifier le code enregistré dans la clé et/ou le code enregistré à bord du véhicule.

2. Véhicule selon la revendication 1, **caractérisé en ce que** la serrure de contact comprend en plus un verrou mécanique et la clé comprend un élément mécanique de clé (14) pour débloquer le verrou mécanique.

3. Véhicule selon la revendication 1 ou 2, **caractérisé en ce que** l'élément mécanique de clé (14) est d'une conception standard commune à tous les systèmes de sécurité.

4. Véhicule selon l'une quelconque des revendications précédentes, **caractérisé en ce que** le module électronique (20) est fonctionnel pour empêcher le démarrage du moteur du véhicule lorsque le code enregistré dans la clé ne correspond pas à un code enregistré à bord du véhicule.

5. Véhicule selon l'une quelconque des revendications 1 à 3, **caractérisé en ce que** le module électronique (20) est fonctionnel pour permettre le fonctionnement du véhicule mais avec seulement une fonctionnalité grandement réduite lorsque le code enregistré dans la clé ne correspond pas au code enregistré à bord du véhicule.

6. Véhicule selon l'une quelconque des revendications précédentes, **caractérisé en ce que** la puce à mémoire dans la clé fait partie d'un module (12) qui communique au moyen d'une liaison sans fil à distance avec le module électronique (20).

7. Véhicule selon l'une quelconque des revendications précédentes, **caractérisé en ce que** l'énergie est fournie à la clé au moyen d'une boucle inductive.

8. Véhicule selon l'une quelconque des revendications précédentes, **caractérisé en ce que** le module électronique (20) est programmable par l'intervenant et comprend un module d'affichage et un dispositif d'entrée manuelle de données.

9. Véhicule selon l'une quelconque des revendications 1 à 7, **caractérisé en ce que** le module électronique (20) est connectable à un dispositif externe de traitement et d'entrée de données pour permettre de modifier les codes de sécurité enregistrés dans la clé et à bord du véhicule.

10. Véhicule selon la revendication 9, **caractérisé en ce que** le module électronique (20) est fonctionnel pour empêcher des modifications des codes de sécurité pendant une période de temps définie après toute tentative pour modifier les codes de sécurité.

11. Véhicule selon l'une quelconque des revendications précédentes, **caractérisé en ce que** le module électronique est fonctionnel en plus pour enregistrer un code de sécurité de secours pour permettre un accès temporaire au véhicule.

12. Véhicule selon l'une quelconque des revendications précédentes, **caractérisé en ce que** le module électronique est fonctionnel en plus pour écrire dans la mémoire dans les données de clé relatives aux paramètres personnels du conducteur et/ou à des données de performance du véhicule.

13. Véhicule selon l'une quelconque des revendications précédentes, **caractérisé en ce que** la puce à mémoire incorporée dans la clé est fonctionnelle en plus pour enregistrer un code d'identification de conducteur et un enregistreur est prévu à bord du véhicule pour surveiller des actions réalisées par chaque conducteur identifié.
